# EUROPEAN PATENT APPLICATION

(11) **EP 4 270 254 A1**
(43) Date of publication of application: **01.11.2023**
(21) Application number: 22192876.5
(22) Date of filing: 30.08.2022
(51) Int. Cl.: G06N 3/082, G06N 3/0464

(54) **OPTIMIZING METHOD AND COMPUTER SYSTEM FOR NEURAL NETWORK AND COMPUTER-READABLE STORAGE MEDIUM**

(30) Priority: 27.04.2022 TW 111115920
(71) Applicant: Wistron Corporation, New Taipei City 22181 (TW)
(72) Inventor: GUO, Jiun-In, Hsinchu (TW); CHANG, En-Chih, Hsinchu (TW)
(74) Representative: 2K Patentanwälte Blasberg Kewitz & Reichel

(57) **Abstract**

Embodiments of the disclosure provide an optimizing method and a computer system (100) for a neural network, and a computer-readable storage medium. In the method, the neural network is pruned sequentially using two different pruning algorithms. The pruned neural network is retrained in response to each pruning algorithm pruning the neural network. Thereby, the computation amount and the parameter amount of the neural network are reduced.

## Description

### TECHNICAL FIELD

The disclosure relates to a neural network technology, and more particularly, relates to an optimizing method and a computer system for a neural network, and a computer-readable storage medium.

### BACKGROUND

With the rapid development of artificial intelligence (AI) technology in recent years, the parameter amount and computational complexity of neural network models are increasing sharply. As a result, the compression technology for neural network models is also evolving. It is worth noting that pruning is an important technique for compressing models. However, the existing pruning methods are all single-type pruning.

### SUMMARY

Embodiments of the disclosure provide an optimizing method and a computer system for a neural network, and a computer-readable storage medium that provide a hybrid pruning solution to achieve model simplification.

An optimizing method for a neural network according to an embodiment of the disclosure includes (but not limited to) the following. The neural network is pruned sequentially using two different pruning algorithms. A pruned neural network is retrained in response to each of the pruning algorithms pruning the neural network.

A computer system for a neural network according to an embodiment of the disclosure includes (but not limited to) a memory and a processor. The memory is configured to store a code. The processor is coupled to the memory. The processor is configured to load and execute the code to sequentially prune the neural network using two different pruning algorithms, and retrain a pruned neural network in response to each of the pruning algorithms pruning the neural network.

A non-transitory computer-readable storage medium according to an embodiment of the disclosure is configured to store a code. The processor loads the code to execute the optimizing method for a neural network as described above.

Based on the above, the optimizing method and the computer system for a neural network, and the computer-readable storage medium according to the embodiments of the disclosure use a variety of pruning algorithms to realize a deep learning neural network with low computing cost.

In order to make the above and other features and advantages of the disclosure easy to understand, exemplary embodiments are described in detail with reference to the accompanying drawings hereinafter.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a block diagram of components of the computer system according to an embodiment of the disclosure.
FIG. 2 is a flowchart of the optimizing method for a neural network according to an embodiment of the disclosure.
FIG. 3 is a flowchart of channel pruning via geometric median (CPGM) according to an embodiment of the disclosure.
FIG. 4 is a flowchart of the slimming method according to an embodiment of the disclosure.
FIG. 5 is a flowchart of a combination of slimming and ThiNet according to an embodiment of the disclosure.
FIG. 6 is a flowchart of a combination of CPGM and ThiNet according to an embodiment of the disclosure.
FIG. 7 is a schematic diagram of structured and unstructured trimming according to an embodiment of the disclosure.
FIG. 8 is a schematic diagram of the user interface according to an embodiment of the disclosure.

### DETAILED DESCRIPTION OF DISCLOSED EMBODIMENTS

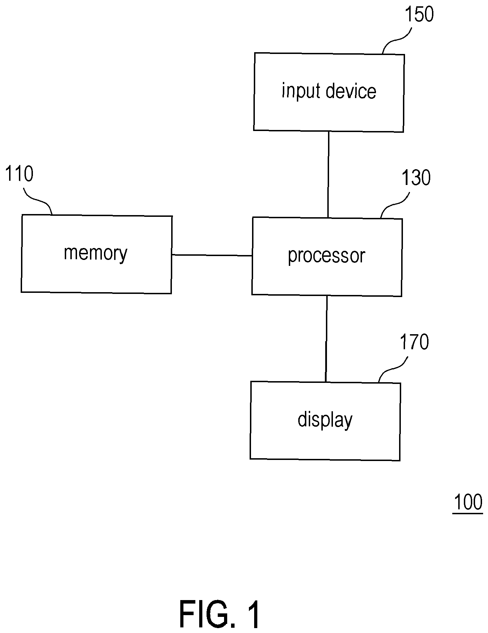

FIG. 1 is a block diagram of components of a computer system 100 according to an embodiment of the disclosure. Referring to FIG. 1, the computer system 100 includes (but not limited to) a memory 110 and a processor 130. The computer system 100 may be a desktop computer, a laptop computer, a smart phone, a tablet computer, a server, a medical or product testing instrument, or other computing devices.

The memory 110 may be any type of fixed or removable random access memory (RAM), read only memory (ROM), flash memory, traditional hard disk drive (HDD), solid-state drive (SSD), or the like. In an embodiment, the memory 110 is configured to store codes, software modules, configurations, data, or files (for example, training samples, model parameters, pruning sets, or redundant channels).

The processor 130 is coupled to the memory 110. The processor 130 may be a central processing unit (CPU), a graphic processing unit (GPU), a programmable general-purpose or special-purpose microprocessor, a digital signal processor (DSP), a programmable controller, a field programmable gate array (FPGA), an application-specific integrated circuit (ASIC), a neural network accelerator, other similar components, or a combination of the foregoing components. In an embodiment, the processor 130 is configured to execute all or some of the operations of the computer system 100, and load and execute each code, software module, file, and data stored in the memory 110.

In some embodiments, the computer system 100 further includes an input device 150. The input device 150 may be a touch panel, a mouse, a keyboard, a trackball, a switch, or a key. In an embodiment, the input device 150 is configured to receive a user operation such as a swipe, touch, press, or click operation.

In some embodiments, the computer system 100 further includes a display 170. The display 170 may be a liquid-crystal display (LCD), a light-emitting diode (LED) display, an organic light-emitting diode (OLED) display, a quantum dot display, or other types of displays. In an embodiment, the display 170 is configured to display an image. The content of the image may be a user interface.

Hereinafter, the method described in the embodiments of the disclosure will be described with reference to the devices, components, and modules in the computer system 100. Each process of the method may be adjusted according to the situation, and is not limited to the description here.

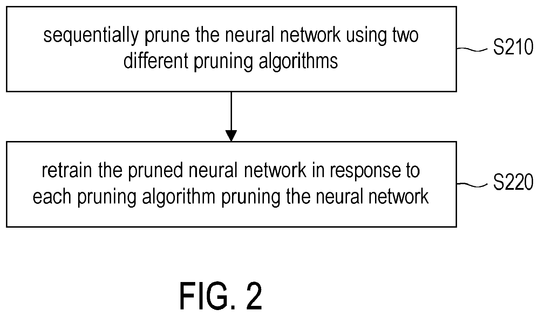

FIG. 2 is a flowchart of an optimizing method for a neural network according to an embodiment of the disclosure. Referring to FIG. 2, the processor 130 uses two different pruning algorithms to prune the neural network sequentially (step S210). Specifically, the neural network is trained with a deep learning algorithm. The deep learning algorithm is, for example, YOLO (You only look once), AlexNet, ResNet, Region Based Convolutional Neural Networks (R-CNN), or Fast R-CNN (Fast CNN). It should be noted that the neural network may be used for image classification, object detection, or other inferences, and the embodiments of the disclosure are not intended to limit the use of the neural network. A trained neural network may meet preset accuracy criteria.

It is worth noting that the trained neural network has corresponding parameters (for example, weight, number of channels, bias, or activation function) in each layer. It is conceivable that too many parameters may affect the computing efficiency. Pruning is one of the compression techniques used for neural networks. Pruning is used to subtract non-influential or less influential elements (for example, channels, filters/kernels, feature maps, layers, neurons, or other parameters) from a neural network.

Unlike the related art, the embodiment of the disclosure provides a hybrid pruning solution. The two or more pruning algorithms may be channel, weight, filter, activation, gradient, and hidden layer pruning or pruning search algorithms, which achieve the greatest compression rate and the lowest accuracy loss compared with a single pruning solution.

In an embodiment, one of the multiple pruning algorithms used in the embodiment of the disclosure is a channel pruning (or called filter pruning) algorithm. The channel pruning algorithm is, for example, ThiNet, network slimming, filter pruning via geometric median (FPGM), or channel pruning via geometric median (CPGM).

For example, ThiNet prunes the current layer according to the statistics of the next layer and expects to prune the filter which has less or minimal influence on the output of the current layer. Therefore, the pruned channel makes the mean squared error less than an error threshold. Next, the channels are pruned layer by layer. Finally, the remaining channels that approximate all channels in each layer are derived.

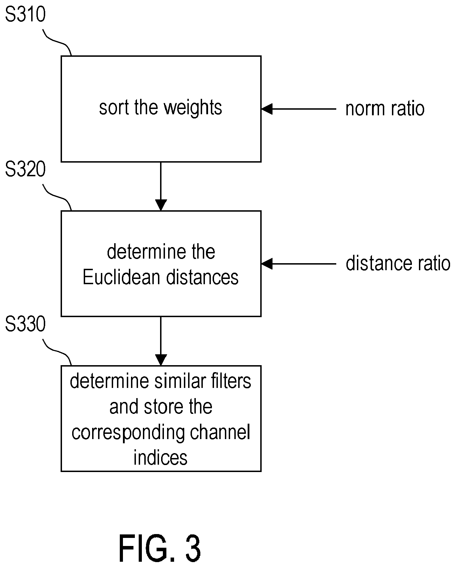

For example, FIG. 3 is a flowchart of CPGM according to an embodiment of the disclosure. Referring to FIG. 3, CPGM refers to Euclidean distances based on filter weights and searching for redundant filter weights proposed by FPGM. First, the processor 130 may set a norm ratio and a distance ratio. The norm ratio is a ratio set according to the size of the filter weights to be arranged. In other words, the norm ratio is the ratio of the size to be preserved in all the weights. For example, the norm ratio is ninety percent of the filter weights. The distance ratio is a ratio of channel indices that are close to the median of the filter weights based on the Euclidean distances and will be removed. In other words, the distance ratio is the ratio represented by the degree of similarity (distance is related to the degree of similarity) of two filters/channels. The processor 130 may sort the weights based on the set norm ratio and distance ratio (step S310). For example, the filter weights in the trained neural network are arranged in descending order, and the top ninety percent of the weights are picked based on the norm ratio. The processor 130 may determine the Euclidean distances of the filters (step S320), for example, the distances between any tensor and all the filters in a multi-dimensional space. Next, the processor 130 may determine similar filters and store the corresponding channel indices (step S330). For example, the point with the smallest sum of Euclidean distances in each layer is defined as the geometric median point. If a filter is close to the geometric median point of the layer to which the filter belongs in the multi-dimensional space (that is, being closer means higher similarity, and being farther away means lower similarity), the filter may be regarded as data redundancy and may be replaced. For example, this filter/channel is a redundant filter/channel and may be pruned. The index is a number representing the filter/channel. The processor 130 may assign one or more filter/channel indices to a pruning set. That is, this set includes the redundant filters/channels to be pruned.

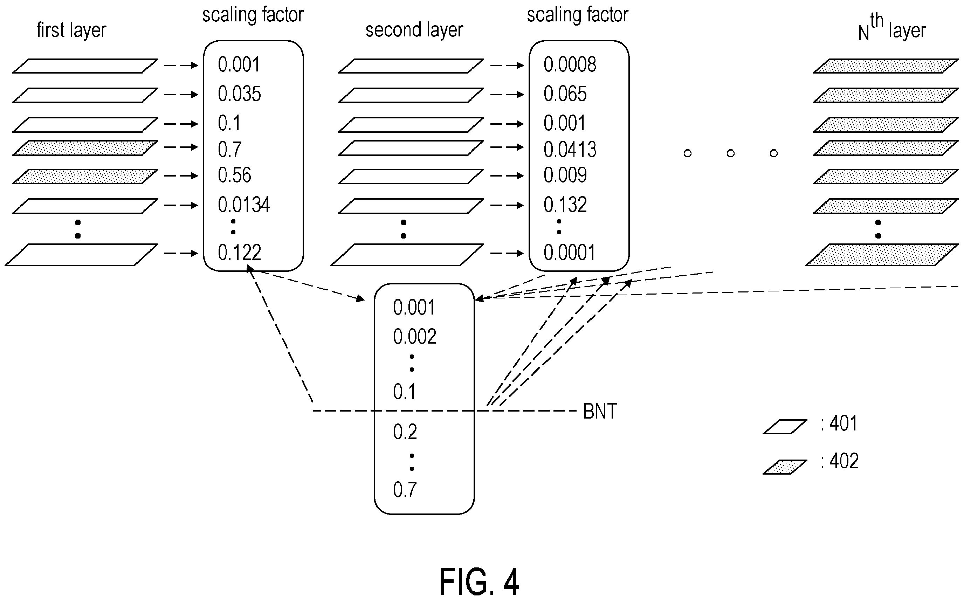

For example, FIG. 4 is a flowchart of a slimming method according to an embodiment of the disclosure. Referring to FIG. 4, the processor 130 may sort the scaling factors of the channels in each batch normalization layer (for example, the first layer to the N^{th} layer in the figure, where N is a positive integer). The scaling factor is to be multiplied by the output value of the corresponding channel during forward propagation. During the training of the neural network, the scaling factor is trained along with other weights and is subject to constraints (for example, the penalty of sparsity of the L1 norm). It is worth noting that, after training, if the scaling factor is little, the corresponding channel may be regarded as a redundant channel (which may be classified into the pruning set); and if the scaling factor is great, the corresponding channel may be disabled/stopped/not regarded as a redundant channel. As shown in the figure, the global batch normalization threshold BNT is assumed to be 0.15. Thus, the channels with the scaling factors of 0.001, 0.035, 0.1, 0.0134, and 0.122 in the first layer are redundant channels 401, and the channels with the listed scaling factors in the second layer are all redundant channels 401. The channels with scaling factors greater than the batch normalization threshold BNT are non-redundant channels 402. Next, the processor 130 may prune the redundant channels 401 and retain the non-redundant channels 402.

For example, based on both ThiNet and a greedy method, the processor 130 may feed the validation dataset channel by channel, and use the L2 norm function to compare and obtain the difference between the output feature maps of the channels pruned and the channels unpruned. If the difference is less than a difference threshold, the pruned channels may be regarded as redundant channels; and if the difference is not less than the difference threshold, the pruned channels may be regarded as non-redundant channels. The difference from the traditional ThiNet is that, in this embodiment, the sparsity ratio sent to ThiNet is local sparsity, and the local sparsity used for each layer may be different.

In an embodiment, the channel pruning algorithm includes a first channel pruning algorithm and a second channel pruning algorithm. The processor 130 may obtain a first pruning set according to the first channel pruning algorithm. The first pruning set includes one or more (redundant) channels to be pruned selected by the first channel pruning algorithm. In addition, the processor 130 may obtain a second pruning set according to the second channel pruning algorithm. The second pruning set includes one or more (redundant) channels to be pruned selected by the second channel pruning algorithm. That is, the processor 130 uses different channel pruning algorithms to obtain corresponding pruning sets. Next, the processor 130 may determine one or more redundant channels to be pruned according to the first pruning set and the second pruning set. For example, the processor 130 may obtain an intersection, union, any, or a certain number of channels of these pruning sets, thereby providing a hybrid channel pruning solution.

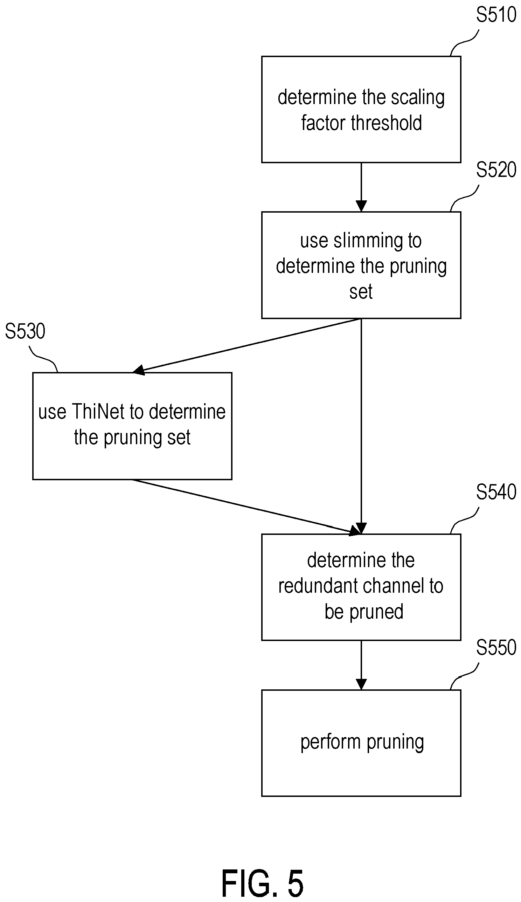

For example, FIG. 5 is a flowchart of a combination of slimming and ThiNet according to an embodiment of the disclosure. Referring to FIG. 5, for the trained neural network, the processor 130 may use the slimming method to determine the scaling factor threshold of each layer (for example, the aforementioned batch normalization threshold) (step S510), and convert the global scaling factor threshold to the local sparsity corresponding to the sparsity ratio of each layer. The processor 130 may determine the first pruning set of each layer according to the local sparsity of each layer (step S520). Next, the processor 130 may select the filter to be pruned (that is, determine the second pruning set) using the ThiNet method according to the local sparsity (step S530). The processor 130 may determine the redundant channel to be pruned according to the intersection of the pruning sets of the slimming and ThiNet methods (step S540), and prune the redundant channel accordingly (step S550).

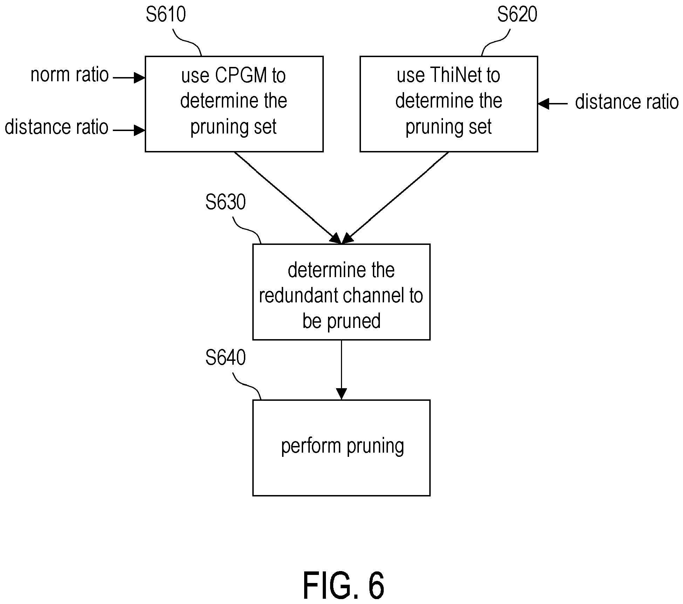

FIG. 6 is a flowchart of a combination of CPGM and ThiNet according to an embodiment of the disclosure. Referring to FIG. 6, for the trained neural network, the processor 130 may determine the first pruning set using the CPGM method according to the set norm ratio and distance ratio (step S610), and determine the second pruning set using the ThiNet method according to the set distance ratio (step S620). It is worth noting that the ThiNet method focuses on finding the channel effect on the output feature map. The CPGM method not only prunes the filter weights but also obtains the difference between the redundant channel weights and the previous ones. Next, the processor 130 may determine the redundant channel to be pruned according to the intersection of the pruning sets of the ThiNet and CPGM methods (step S630), and prune the redundant channel accordingly (step S640).

It should be noted that, in other embodiments, other channel pruning algorithms or more channel pruning algorithms may also be combined.

In an embodiment, another of the pruning algorithms used in the embodiment of the disclosure is a weight pruning (or called element-wise pruning) algorithm. The weight pruning algorithm is, for example, the lottery ticket hypothesis.

Taking the lottery ticket hypothesis as an example, the processor 130 randomly initializes a neural network. The neural network includes a plurality of sub-networks. The processor 130 may iteratively train the neural network and find the sub-networks that are easier to win. During the process, the processor 130 may establish a mask to set a known pruning strategy. This strategy relates to which sub-networks influence the neural network, that is, the sub-networks that can win. Then, the processor 130 may prune the sub-networks that have no critical influence (that do not win) according to the mask. Taking the weights as an example, the processor 130 may sort the weights and prune a specific ratio or number of the smallest weights.

In an embodiment, in response to pruning the neural network using the channel pruning algorithm, the processor 130 may then use the weight pruning algorithm to prune the neural network. The channel pruning algorithm belongs to structured pruning, and the weight pruning algorithm belongs to unstructured pruning. Since unstructured pruning is an irregular type of pruning, it may be difficult to ensure accuracy. Performing structured pruning first ensures that the weights are restored to stable values and ensures the overall structure. Therefore, the subsequent unstructured pruning can fine-tune the network to better accuracy.

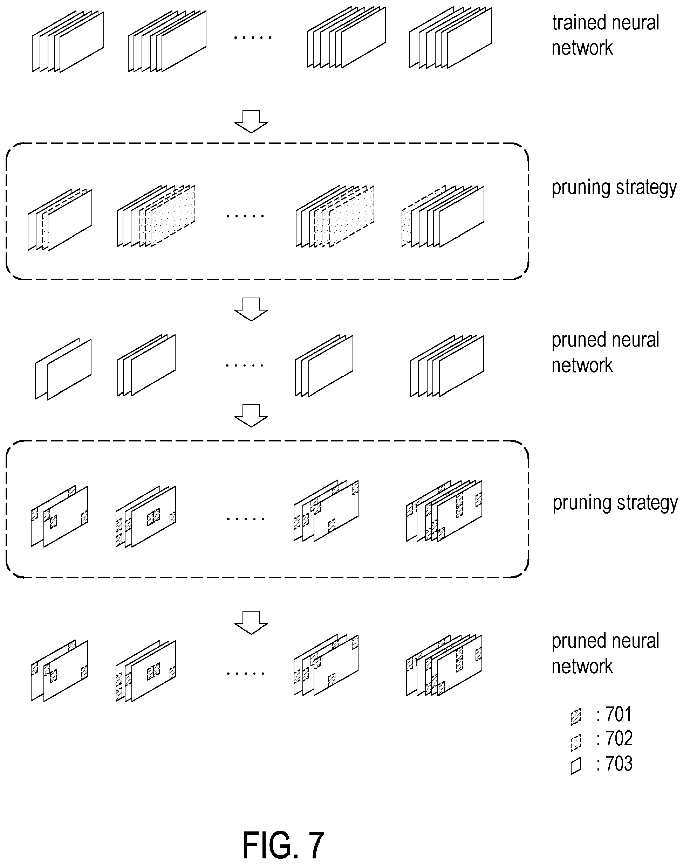

For example, FIG. 7 is a schematic diagram of structured and unstructured trimming according to an embodiment of the disclosure. Referring to FIG. 7, the processor 130 may use a structured pruning strategy to prune the trained neural network so as to obtain a pruned neural network. Next, the processor 130 may use a unstructured pruning strategy to prune the pruned neural network so as to obtain a final pruned neural network. The structured pruning strategy keeps unpruned channels 703 and deletes redundant channels 702. The unstructured pruning strategy deletes redundant weights 701.

In other embodiments, other unstructured pruning methods (for example, gradient or activation) may also be used, or unstructured pruning may be performed before structured pruning.

In an embodiment, the processor 130 may converge the scaling factor of one or more batch normalization layers of the neural network prior to pruning. For example, the processor 130 may perform a sparsity training on the trained neural network. The penalty of L1 is added to the loss function used in training the neural network. Batch normalization is the normalization of individual mini-batches until a normal distribution is formed with a mean of 0 and a standard deviation of 1. The overall correlation of the scaling factors between layers is converged, which helps, for example, the slimming method to find the more suitable channel (for example, with higher accuracy and/or less amount).

In some embodiments, if the scaling factor of the trained neural network has approached a preset value, the processor 130 may omit the sparsity training or other schemes for converging the scaling factor.

Referring to FIG. 2, in response to each pruning algorithm pruning the neural network, the processor 130 retrains the pruned neural network (step S220). Specifically, after each pruning, the processor 130 may retrain the pruned neural network. When the neural network (model) converges, the processor 130 may use another pruning algorithm to prune the pruned neural network. For example, the neural network is retrained after channel pruning, and when the neural network converges, weight pruning is then performed. During weight pruning, when the training reaches a certain number of iterations, the processor 130 may sort the weights in ascending order and then delete the smallest weights in the sorting according to the pruning ratio. Finally, the processor 130 may initialize the remaining weights back to the parameters of the original pre-trained model, and then retrain the pruned neural network to generate the final lightweight model.

That is to say, if the channels are pruned, the preserved channels are initialized, and then the parameters of these preserved channels are trained. If the weights are pruned, the preserved weights are initialized, and then the parameters of these preserved weights are trained. The retraining of activation pruning, hidden layer pruning, or other pruning may be performed accordingly and thus will not be repeated here.

It should be noted that the foregoing description takes the combination of two pruning algorithms as an example, but in other embodiments, more pruning algorithms may be combined.

In an embodiment, the processor 130 may receive an input operation through the input device 150. The input operation is used to set the pruning ratio, and at least one of two or more pruning algorithms is selected to prune according to the pruning ratio. That is, the pruning ratio is the ratio of the elements to be pruned (for example, channels, weights, or activations) to all elements in each layer or each filter. For example, the keyboard receives an input operation about a pruning ratio of 50%. For channel pruning, the processor 130 selects 50% of the channels in a layer or layers as redundant channels. For weight pruning, the processor 130 may delete 50% of the smallest weights.

In an embodiment, the processor 130 may use validation samples of known inference results to determine the accuracy loss of the pruned neural network. For example, if 10 out of 100 validation samples are wrong in inference, the accuracy loss is 10%. The processor 130 may compare the accuracy loss and quality threshold of the pruned neural network. The quality threshold is allowable accuracy loss. For example, the quality threshold is 15%, 20%, or 25%. The processor 130 may change the pruning ratio of at least one of the pruning algorithms according to the comparison result of the accuracy loss and the quality threshold. That is, the quality threshold is used to evaluate whether to change the pruning ratio. For example, if the accuracy loss is lower than the quality threshold, the processor 130 may increase the pruning ratio. If the accuracy loss is higher than the quality threshold, the processor 130 may reduce the pruning ratio. In an embodiment, the processor 130 may take the pruned neural network with the greatest pruning ratio and whose accuracy loss is lower than the quality threshold as the final lightweight model.

In an embodiment, the input operation received through the input device 150 may be used to set the quality threshold, and at least one of two or more pruning algorithms is selected to prune according to the quality threshold. For example, the mouse receives an input operation about a quality threshold of 15%.

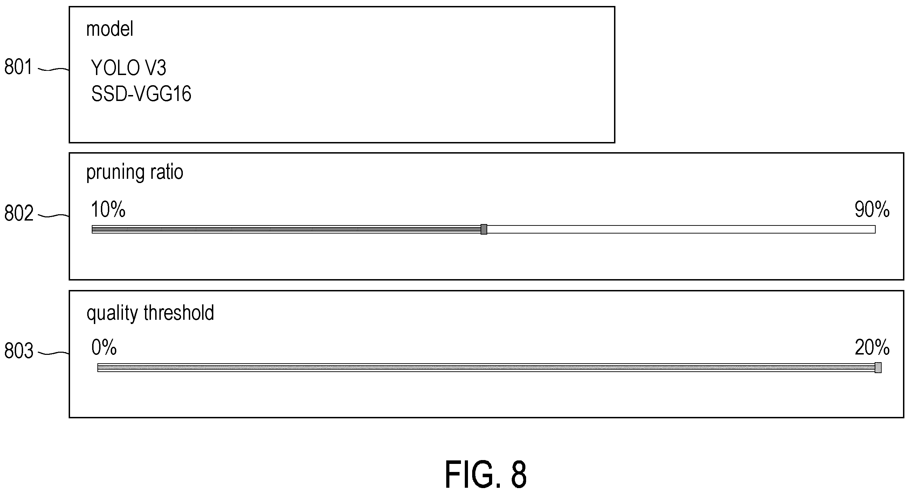

In an embodiment, the processor 130 may provide (display) a user interface through the display 170. For example, FIG. 8 is a schematic diagram of the user interface according to an embodiment of the disclosure. Referring to FIG. 8, the user interface includes a model setting 801, a pruning ratio setting 802, and a quality threshold setting 803. The model setting 801 is used to select the type of the neural network, for example, third-generation (V3) YOLO or Single Shot MultiBox Detector (SSD) Visual Geometry Group (VGG)16. The pruning ratio setting 802 is used to select the pruning ratio, for example, 10% to 90%. The quality threshold setting 803 is used to set the quality threshold (that is, allowable error rate), for example, 0% to 20%.

An embodiment of the disclosure further provides a non-transitory computer-readable storage medium (for example, a hard disk, an optical disk, a flash memory, a solid-state disk (SSD), etc.) for storing a code. The processor 130 or other processors of the computer system 100 may load the code and execute the corresponding processes of one or more optimizing methods according to the embodiments of the disclosure. These processes have been described above and thus will not be repeated here.

To sum up, in the optimizing method and the computer system for a neural network, and the computer-readable storage medium according to the embodiments of the disclosure, the overall computation amount of the neural network is reduced by using hybrid pruning. For example, channel and weight pruning algorithms may be combined to reduce the number of channels and the number of weights. According to the embodiments of the disclosure, the pruning strategy is evaluated from the viewpoints of the pruning ratio and the accuracy, so as to meet the requirements of high pruning ratio and high accuracy. In addition, the embodiment of the disclosure also provides a user interface, which allows the operator to easily understand and get used to the operation.

## Claims

1. An optimizing method for a neural network, comprising:
(S210) sequentially pruning the neural network using two different pruning algorithms; and
(S220) retraining a pruned neural network in response to each of the pruning algorithms pruning the neural network.

2. The optimizing method for the neural network according to claim 1, wherein one of the two pruning algorithms is a channel pruning algorithm.

3. The optimizing method for the neural network according to claim 2, wherein the other one of the two pruning algorithms is a weight pruning algorithm, wherein sequentially pruning the neural network using the two different pruning algorithms comprises:
(S210) pruning the neural network using the weight pruning algorithm in response to pruning the neural network using the channel pruning algorithm.

4. The optimizing method for the neural network according to claim 2 or 3, wherein the channel pruning algorithm comprises a first channel pruning algorithm and a second channel pruning algorithm, and sequentially pruning the neural network using the two different pruning algorithms comprises:
obtaining a first pruning set according to the first channel pruning algorithm, wherein the first pruning set comprises at least one channel to be pruned selected by the first channel pruning algorithm;
obtaining a second pruning set according to the second channel pruning algorithm, wherein the second pruning set is at least one channel to be pruned selected by the second channel pruning algorithm; and
determining at least one redundant channel (401, 702) to be pruned according to the first pruning set and the second pruning set.

5. The optimizing method for the neural network according to claim 4, wherein determining the at least one redundant channel (401, 702) to be pruned according to the first pruning set and the second pruning set comprises:
determining the at least one redundant channel (401, 702) according to an intersection of the first pruning set and the second pruning set.

6. The optimizing method for the neural network according to claim 1, wherein before sequentially pruning the neural network using the two different pruning algorithms, the optimizing method further comprises:
converging a scaling factor of at least one batch normalization layer of the neural network.

7. The optimizing method for the neural network according to claim 1, further comprising:
receiving an input operation, wherein the input operation is used to set a pruning ratio, and at least one of the two pruning algorithms prunes according to the pruning ratio;
providing a user interface; and
receiving a determination of the pruning ratio or a quality threshold through the user interface; or
comparing an accuracy loss of the pruned neural network with the quality threshold; and
changing the pruning ratio of at least one of the two pruning algorithms according to a comparison result with the quality threshold.

8. A computer system (100) for a neural network, comprising:
a memory (110) configured to store a code; and
a processor (130) coupled to the memory (110) and configured to load and execute the code to:
sequentially prune the neural network using two different pruning algorithms; and
retrain a pruned neural network in response to each of the pruning algorithms pruning the neural network.

9. The computer system (100) for the neural network according to claim 8, wherein one of the two pruning algorithms is a channel pruning algorithm.

10. The computer system (100) for the neural network according to claim 9, wherein the other one of the two pruning algorithms is a weight pruning algorithm, wherein the processor (130) is further configured to:
prune the neural network using the weight pruning algorithm in response to pruning the neural network using the channel pruning algorithm.

11. The computer system (100) for the neural network according to claim 9 or 10, wherein the channel pruning algorithm comprises a first channel pruning algorithm and a second channel pruning algorithm, and the processor (130) is further configured to:
obtain a first pruning set according to the first channel pruning algorithm, wherein the first pruning set comprises at least one channel to be pruned selected by the first channel pruning algorithm;
obtain a second pruning set according to the second channel pruning algorithm, wherein the second pruning set is at least one channel to be pruned selected by the second channel pruning algorithm; and
determine at least one redundant channel (401, 702) to be pruned according to the first pruning set and the second pruning set.

12. The computer system (100) for the neural network according to claim 11, wherein the processor (130) is further configured to:
determine the at least one redundant channel (401, 702) according to an intersection of the first pruning set and the second pruning set.

13. The computer system (100) for the neural network according to one of claims 8-12, wherein the processor (130) is further configured to:
converge a scaling factor of at least one batch normalization layer of the neural network.

14. The computer system (100) for the neural network according to one of claims 8-12, further comprising:
a display (170) coupled to the processor (130), wherein
the processor (130) is further configured to:
provide a user interface through the display; and
receive determination of a pruning ratio or a quality threshold through the user interface, wherein at least one of the two pruning algorithms prunes according to the pruning ratio, and the quality threshold is used to change the pruning ratio, or the processor (130) is further configured to:
compare an accuracy loss of the pruned neural network with the quality threshold; and
change the pruning ratio of at least one of the two pruning algorithms according to a comparison result with the quality threshold.

15. A non-transitory computer-readable storage medium for storing a code, wherein the code is loaded by a processor (130) to execute the optimizing method for the neural network according to anyone of claims 1-7.

## Amended claims

### Amended claims in accordance with Rule 137(2) EPC.

1. A computer-implemented optimizing method for a neural network, comprising:
(S210) sequentially pruning the neural network using two different pruning algorithms; and
(S220) retraining a pruned neural network in response to each of the pruning algorithms pruning the neural network, wherein one of the two pruning algorithms is a channel pruning algorithm, wherein the channel pruning algorithm comprises a first channel pruning algorithm and a second channel pruning algorithm, and sequentially pruning the neural network using the two different pruning algorithms comprises:
obtaining a first pruning set according to the first channel pruning algorithm, wherein the first pruning set comprises at least one channel to be pruned selected by the first channel pruning algorithm;
obtaining a second pruning set according to the second channel pruning algorithm, wherein the second pruning set is at least one channel to be pruned selected by the second channel pruning algorithm; and
determining at least one redundant channel (401, 702) to be pruned according to the first pruning set and the second pruning set.

2. The optimizing method for the neural network according to claim 1, wherein the other one of the two pruning algorithms is a weight pruning algorithm, wherein sequentially pruning the neural network using the two different pruning algorithms comprises:
(S210) pruning the neural network using the weight pruning algorithm in response to pruning the neural network using the channel pruning algorithm.

3. The optimizing method for the neural network according to claim 1 or 2, wherein determining the at least one redundant channel (401, 702) to be pruned according to the first pruning set and the second pruning set comprises:
determining the at least one redundant channel (401, 702) according to an intersection of the first pruning set and the second pruning set.

4. The optimizing method for the neural network according to claim 1, wherein before sequentially pruning the neural network using the two different pruning algorithms, the optimizing method further comprises:
converging a scaling factor of at least one batch normalization layer of the neural network.

5. The optimizing method for the neural network according to claim 1, further comprising:
receiving an input operation, wherein the input operation is used to set a pruning ratio, and at least one of the two pruning algorithms prunes according to the pruning ratio;
providing a user interface; and
receiving a determination of the pruning ratio or a quality threshold through the user interface; or
comparing an accuracy loss of the pruned neural network with the quality threshold; and
changing the pruning ratio of at least one of the two pruning algorithms according to a comparison result with the quality threshold.

6. A computer system (100) for a neural network, comprising:
a memory (110) configured to store a code; and
a processor (130) coupled to the memory (110) and configured to load and execute the code to:
sequentially prune the neural network using two different pruning algorithms;
retrain a pruned neural network in response to each of the pruning algorithms pruning the neural network, wherein one of the two pruning algorithms is a channel pruning algorithm, wherein the channel pruning algorithm comprises a first channel pruning algorithm and a second channel pruning algorithm, the processor (130) is further configured to:
obtain a first pruning set according to the first channel pruning algorithm, wherein the first pruning set comprises at least one channel to be pruned selected by the first channel pruning algorithm;
obtain a second pruning set according to the second channel pruning algorithm, wherein the second pruning set is at least one channel to be pruned selected by the second channel pruning algorithm; and
determine at least one redundant channel (401, 702) to be pruned according to the first pruning set and the second pruning set.

7. The computer system (100) for the neural network according to claim 6, wherein the other one of the two pruning algorithms is a weight pruning algorithm, wherein the processor (130) is further configured to:
prune the neural network using the weight pruning algorithm in response to pruning the neural network using the channel pruning algorithm.

8. The computer system (100) for the neural network according to claim 6 or 7, wherein the processor (130) is further configured to:
determine the at least one redundant channel (401, 702) according to an intersection of the first pruning set and the second pruning set.

9. The computer system (100) for the neural network according to one of claims 6-8, wherein the processor (130) is further configured to:
converge a scaling factor of at least one batch normalization layer of the neural network.

10. The computer system (100) for the neural network according to one of claims 6-8, further comprising:
a display (170) coupled to the processor (130), wherein
the processor (130) is further configured to:
provide a user interface through the display; and
receive determination of a pruning ratio or a quality threshold through the user interface, wherein at least one of the two pruning algorithms prunes according to the pruning ratio, and the quality threshold is used to change the pruning ratio, or the processor (130) is further configured to:
compare an accuracy loss of the pruned neural network with the quality threshold; and
change the pruning ratio of at least one of the two pruning algorithms according to a comparison result with the quality threshold.

11. A non-transitory computer-readable storage medium comprising a code which, when executed by a processor (130), cause the non-transitory computer to carry out the method of one of claims 1-5 of the optimizing method for the neural network.
